# EUROPÄISCHE PATENTSCHRIFT

(11) **EP 3 304 227 B1**
(45) Veröffentlichungstag und Bekanntmachung des Hinweises auf die Patenterteilung: **13.03.2019**
(21) Anmeldenummer: 16720390.0
(22) Anmeldetag: 26.04.2016
(51) Int. Cl.: G05B 19/416

(54) **REGELUNG EINES SPANENDEN BEARBEITUNGSPROZESSES MITTELS P-REGLER UND BELASTUNGSABHÄNGIGEM REGELFAKTOR**
CONTROL OF A METAL-CUTTING MACHINING PROCESS BY MEANS OF P-CONTROLLER AND A LOAD-DEPENDENT CONTROL FACTOR
RÉGULATION D'UN PROCESSUS D'USINAGE PAR ENLÈVEMENT DE COPEAUX AU MOYEN D'UN RÉGULATEUR P ET FACTEUR DE RÉGULATION DÉPENDANT DE LA SOLLICITATION

(30) Priorität: 29.05.2015 DE 102015209916
(43) Veröffentlichungstag der Anmeldung: 11.04.2018
(73) Patentinhaber: ZF Friedrichshafen AG, 88046 Friedrichshafen (DE)
(72) Erfinder: XU, Yiwen, 94113 Tiefenbach (DE); YAKARIA, Herman, 88085 Langenargen (DE); KÖSLER, Tobias, 88045 Friedrichshafen (DE); ACKERMANN, Thomas, 88213 Ravensburg (DE); FAHNAUER, Falko, 88677 Markdorf (DE)
(86) Internationale Anmeldenummer: PCT/EP2016/059230
(87) Internationale Veröffentlichungsnummer: WO 2016/192903

(56) Entgegenhaltungen:
- US-A1- 2004 167 659
- US-A1- 2008 065 257
- US-A1- 2013 322 977

## Beschreibung

Die Erfindung betrifft ein Verfahren zur Regelung eines spanenden Bearbeitungsprozesses auf einer spanenden Werkzeugmaschine.

Die Erfindung betrifft ferner ein Steuergerät für eine spanende Werkzeugmaschine, eine spanende Werkzeugmaschine und ein Verfahren zur spanenden Bearbeitung eines Werkstücks.

Bei einer spanenden bzw. zerspanenden Werkstückbearbeitung kann der Bearbeitungsprozess geregelt werden, um bspw. eine geforderte Werkstück- bzw. Bauteilqualität sicherzustellen und/oder um einen effizienten Bearbeitungsprozess (bspw. im Hinblick auf Energieverbrauch, Werkzeugverschleiß, Bearbeitungszeit oder dergleichen) zu gewährleisten.

Für die Regelung eines spanenden Bearbeitungsprozesses können währenddessen durch Signalerfassung relevante Größen aufgenommen werden, die mit der schwankenden Prozessbelastung (mechanische und thermische Belastung) zwischen Werkzeug und Werkstück korrelieren. Solche Größen sind z. B. die an den Maschinenachsen der Werkzeugmaschine auftretenden Kräfte und/oder die Leistung bzw. die Stromaufnahme der Maschinenantriebe. Aus den erfassten Signalen kann eine Istgröße bzw. Regelgröße y(t) gebildet werden, die mit einer zuvor festgelegten Sollgröße bzw. Führungsgröße w(t) verglichen wird. Die Regelung zielt nun darauf ab, die sich aus dem Vergleich von Regelgröße y(t) und Führungsgröße w(t) ergebene Regelabweichung bzw. Regeldifferenz e(t) durch Änderung einer Stellgröße u(t) zu minimieren, was durch einen sogenannten Regler bewerkstelligt wird. Bei spanenden Werkzeugmaschinen werden zumeist P-Regler (Proportional-Regler) verwendet. US 2008/065257 offenbart ein Verfahren zur Regelung eines Bearbeitungsprozesses, wobei der Regelfaktor während des Bearbeitungsprozesses berechnet wird. US 2004/167659 offenbart ein Verfahren zur Regelung eines Bearbeitungsprozesses, wobei der Regelfaktor konstant gehalten wird, während die Stellgröße verändert wird.

Der Erfindung liegt die Aufgabe zugrunde, die Regelung eines spanenden Bearbeitungsprozesses auf einer Werkzeugmaschine zu verbessern.

Dies gelingt mit einem erfindungsgemäßen Verfahren entsprechend den Merkmalen des Patentanspruchs 1. Mit nebengeordneten Patentansprüchen erstreckt sich die Erfindung auch auf ein Steuergerät für eine spanende Werkzeugmaschine, auf eine spanende Werkzeugmaschine und auf ein Verfahren zur spanenden Bearbeitung eines Werkstücks. Bevorzugte Weiterbildungen und Ausgestaltungen ergeben sich analog für alle Erfindungsgegenstände sowohl aus den abhängigen Patentansprüchen als auch aus den nachfolgenden Erläuterungen.

Das erfindungsgemäße Verfahren zur Regelung eines spanenden Bearbeitungsprozesses auf einer Werkzeugmaschine sieht den Einsatz bzw. die Verwendung eines P-Reglers vor, der basierend auf der Regelabweichung e(t) zwischen der Regelgröße y(t) und der Führungsgröße w(t) eine den spanenden Bearbeitungsprozess beeinflussende Stellgröße u(t) bestimmt bzw. verändert. Erfindungsgemäß ist vorgesehen, dass der Regelfaktor K bzw. die Verstärkung des P-Reglers veränderlich ist und in Abhängigkeit des momentanen Werts der Regelgröße y(t) (automatisch) über vorab definierte Belastungskennfelder ermittelt bzw. aus diesen vorab definierten Belastungskennfeldern ausgewählt wird, wobei jedes Belastungskennfeld für einen definierten Wert oder Wertebereich der Regelgröße y(t) einen vorbestimmten Regelfaktor K vorgibt.

Ein P-Regler zeichnet sich dadurch aus, dass eine lineare Abhängigkeit zwischen dem Istwert der Regelgröße y(t) bzw. der Regelabweichung e(t) und der Stellgröße u(t) existiert. Der Zusammenhang zwischen der Regelabweichung e(t) und der Stellgröße u(t) kann durch die P-Regler-Gleichung u(t) = K · e(t) beschrieben werden, mit e(t) = w(t) - y(t). Der Wert K wird als Regelfaktor oder auch als Verstärkung bezeichnet. Der Wert w(t) ist die Führungsgröße, die sowohl als Grenzwert als auch als Grenzkurve definiert sein kann. Der Istwert der Regelgröße y(t) kann durch Signalerfassung bestimmt bzw. durch Messung gemessen werden.

Im Rahmen der Erfindung gilt auch ein PI-Regler (der zusätzlich integral wirkt) oder ein PID-Regler (der zusätzlich integral und differentiell wirkt) als P-Regler.

Als Regelgröße y(t) kann eine an einer Maschinenachse der Werkzeugmaschine auftretende Kraft oder die Leistung eines Maschinenantriebs der Werkzeugmaschine, insbesondere die Antriebsleistung eines Werkzeugspindelantriebs, verwendet werden.

Als Stellgröße u(t) kann die Vorschubgeschwindigkeit des Werkzeugs, insbesondere eines Fräs- oder Schleifwerkzeugs, bzw. die Vorschubgeschwindigkeit einer das Werkzeug aufnehmenden Werkzeugspindel oder die Drehzahl des Werkzeugs verwendet werden. Beides hat Einfluss auf die Spangeschwindigkeit, insbesondere auf die Schnitt- bzw. Schleifgeschwindigkeit.

Bevorzugt sind drei Belastungskennfelder vorgesehen, die jeweils einen Regelfaktor für einen Überlastbereich der spanenden Bearbeitung, einen Unterlastbereich der spanenden Bearbeitung und einen Ziellastbereich der spanenden Bearbeitung vorgeben. Besonders bevorzugt weist der Regelfaktor für den Ziellastbereich den Wert null (0) auf, um im Ziellastbereich das ständige Regeln zu verhindern. Im Ziellastbereich findet quasi keine Regelung, d. h keine Änderung der Stellgröße statt. Der Regelfaktor für den Unterlastbereich kann durch Multiplikation des Regelfaktors für den Überlastbereich mit einem Sicherheitsfaktor (< 1) bestimmt werden, um im Unterlastbereich gegenüber dem Überlastbereich ein trägeres Regelverhalten zu erzeugen. Es können auch weniger als drei oder mehr als drei Belastungskennfelder vorgesehen sein.

Das mit einem nebengeordneten Patentanspruch beanspruchte erfindungsgemäße Steuergerät (Steuereineinrichtung) für eine spanende Werkzeugmaschine ist zur Regelung eines spanenden Bearbeitungsprozesses auf der betreffenden Werkzeugmaschine mit Hilfe eines P-Reglers ausgebildet, derart, dass der P-Regler basierend auf der Regelabweichung e(t) zwischen der Führungsgröße w(t) und der Regelgröße y(t) eine den spanenden Bearbeitungsprozess beeinflussende Stellgröße u(t) bestimmt bzw. verändert, wobei der Regelfaktor K des P-Reglers veränderlich ist und in Abhängigkeit des momentanen Werts der Regelgröße y(t) über vorab definierte Belastungskennfelder ermittelt wird, wozu jedes Belastungskennfeld für einen definierten Wert oder Wertebereich der Regelgröße y(t) einen vorbestimmten Regelfaktor K vorgibt.

Bei dem erfindungsgemäßen Steuergerät kann es sich um eine Computereinrichtung oder dergleichen mit einer geeigneten Softwareprogrammierung handeln. Das erfindungsgemäße Steuergerät kann mehrere Teilsteuergeräte umfassen. Sonstige Weiterbildungen und Ausgestaltungen ergeben sich analog aus den vorausgehenden oder auch nachfolgenden Erläuterungen.

Die mit einem weiteren nebengeordneten Patentanspruch beanspruchte erfindungsgemäße spanende Werkzeugmaschine weist ein erfindungsgemäßes Steuergerät auf, welches auf dieser Werkzeugmaschine die Regelung eines spanenden Bearbeitungsprozesses nach dem erfindungsgemäßen Verfahren ermöglicht. Bei dieser Werkzeugmaschine handelt es sich bevorzugt um eine Fräs- und/oder Schleifmaschine und insbesondere um eine Wälzfräs- und/oder Wälzschleifmaschine zur Herstellung und/oder Bearbeitung einer Verzahnung.

Das mit einem weiteren nebengeordneten Patentanspruch beanspruchte Verfahren zur spanenden Bearbeitung eines Werkstücks umfasst eine erfindungsgemäße Regelung des spanenden Bearbeitungsprozesses und/oder wird auf einer erfindungsgemäßen Werkzeugmaschine ausgeführt. Bei dem spanend zu bearbeitenden Werkstück handelt es sich insbesondere um einen Zahnradrohling für die Herstellung eines Zahnrads mittels (kontinuierlichem) Wälzfräsen oder Wälzschleifen der Verzahnung. Weiterbildungen und Ausgestaltungen ergeben sich analog aus den vorausgehenden oder auch nachfolgenden Erläuterungen.

Die Erfindung wird nachfolgend mit Bezug auf die Figuren in der Zeichnung näher erläutert. Die in den Figuren gezeigten und/oder nachfolgend erläuterten Merkmale können, auch losgelöst von konkreten Merkmalskombinationen, die Erfindung weiterbilden.
- Fig. 1: veranschaulicht schematisch die erfindungsgemäße Regelung eines spanenden Bearbeitungsprozesses auf einer Werkzeugmaschine, bei der der Regelfaktor anhand von Belastungskennfeldern ermittelt wird.
- Fig. 2: veranschaulicht in einem Diagramm die Belastungskennfelder zur Bestimmung des Regelfaktors bei der Regelung gemäß Fig. 1.

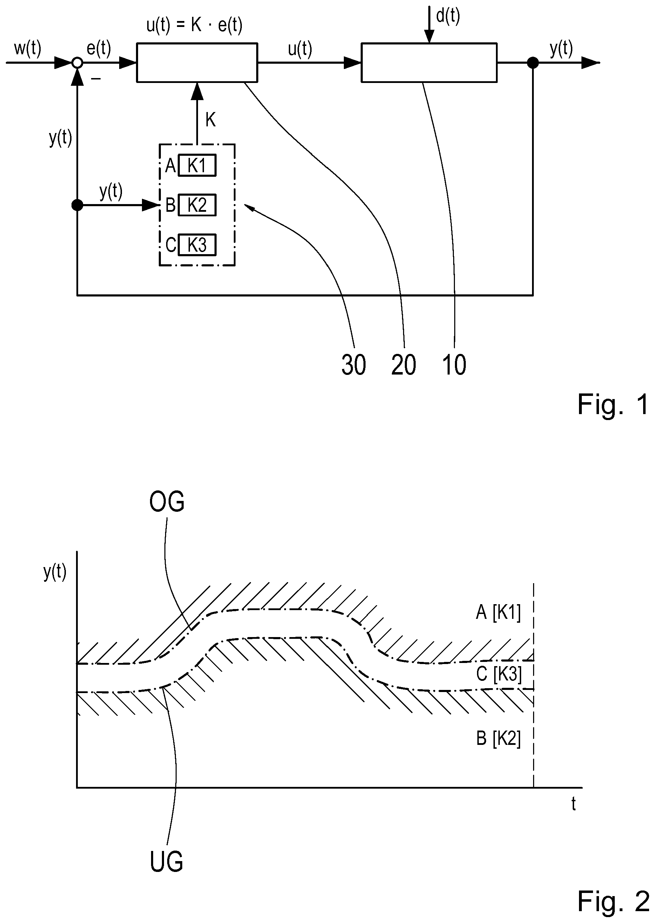

In Fig. 1 ist der zu regelnde spanende Bearbeitungsprozess mit 10 bezeichnet. Aufgrund einwirkender Störgrößen d(t) unterliegt die Prozessbelastung (mechanische und thermische Belastung) zwischen Werkzeug und Werkstück Schwankungen, die durch Regelung mittels eines P-Reglers 20 ausgeglichen werden sollen.

Hierzu wird während des Bearbeitungsprozesses eine Regelgröße y(t) erfasst bzw. gemessen, wobei es sich z. B. um die an einer Maschinenachse der Werkzeugmaschine auftretende Kraft oder um die Leistung eines Maschinenantriebs der Werkzeugmaschine handelt. Die Regelgröße y(t) wird mit einer zuvor festgelegten Führungsgröße w(t) verglichen, wobei durch Differenzbildung (w(t) - y(t)) eine Regelabweichung e(t) bestimmt wird. Anhand der Regelabweichung e(t) wirkt der P-Regler 20 durch Verändern einer Stellgröße u(t), wobei es sich z. B. um die Vorschubgeschwindigkeit oder die Drehzahl des Werkzeugs handelt, so auf den spanenden Bearbeitungsprozess 10 ein, dass die Regeldifferenz e(t) minimiert wird. Der Zusammenhang zwischen der Stellgröße u(t) und der Regeldifferenz e(t) wird durch die P-Regler-Gleichung u(t)= K · e(t) beschrieben, wobei der Wert K als Regelfaktor bezeichnet wird.

Die Erfindung sieht vor, dass der Regelfaktor K des P-Reglers 20 nicht konstant, sondern belastungsabhängig und somit veränderlich ist. Der Regelfaktor K wird während des spanenden Beareitungsprozesses 10 in Abhängigkeit des momentanen Werts der Regelgröße y(t) über vorab definierte Belastungskennfelder A, B und C ermittelt, wobei jedes der Belastungskennfelder A, B und C für einen definierten Wert oder Wertebereich der Regelgröße y(t) einen vorbestimmten Regelfaktor K1, K2 oder K3 vorgibt. Dies wird nachfolgend mit Bezug auf die Fig. 2 erläutert.

Fig. 2 veranschaulicht drei vorab definierte Belastungskennfelder A, B, und C für den spanenden Bearbeitungsprozess 10, wobei die Belastungskennfelder A, B, und C in Abhängigkeit von der Bearbeitungszeit t (oder alternativ bspw. in Abhängigkeit vom Vorschubweg) definiert sind.

Das oberste Belastungskennfeld A ist der Überlastbereich. Liegt der momentane Wert der erfassten bzw. gemessenen Regelgröße y(t) in diesem Bereich ist der Bearbeitungsprozess 10 überlastet (y(t) > w(t)). D. h., die Prozessbelastung ist zu hoch, wodurch bspw. der Werkzeugverschleiß ansteigt und/oder die gewünschte Bearbeitungsqualität nicht erreicht wird. Dem Überlastbereich A ist der Regelfaktor K1 zugeordnet, wobei dieser Regelfaktor K1 automatisch ausgewählt und der aktuellen Regelung mit Hilfe des P-Reglers 20 zugrunde gelegt wird.

Das untere Belastungskennfeld B ist der Unterlastbereich. Liegt der momentane Wert der Regelgröße y(t) in diesem Bereich ist der Bearbeitungsprozess 10 unterlastet (y(t) < w(t)) und dadurch z. B. ineffizient. Dem Unterlastbereich B ist der Regelfaktor K2 zugeordnet, wobei dieser Regelfaktor K2 automatisch ausgewählt und der aktuellen Regelung mit Hilfe des P-Reglers 20 zugrunde gelegt wird. Der Regelfaktor K2 für den Unterlastbereich B kann durch Multiplikation des Regelfaktors K1 für den Überlastbereich A mit einem Sicherheitsfaktor SF gebildet werden (K2 = SF · K1, mit SF < 1). Dadurch kann im Unterlastbereich B ein trägeres Regelverhalten erzeugt werden, damit die Prozessbelastung nur langsam erhöht und die Überschreitung der Prozessbelastungsgrenze OG nach Möglichkeit vermieden wird.

Das mittlere Belastungskennfeld C ist der Ziellastbereich. Der Grenzverlauf OG zum Überlastbereich A entspricht dem Verlauf der Führungsgröße w(t) (wobei auch ein konstanter Verlauf, d. h. w(t) = const., vorgesehen sein kann, was faktisch einem Festwert entspricht), weswegen dieser Grenzverlauf OG auch als Prozessbelastungsgrenze bezeichnet werden kann. Der Grenzverlauf UG zum Unterlastbereich B, die sogenannte Kontrollgrenze, kann durch parallele Verschiebung (Offset) der Prozessbelastungsgrenze OG, bspw. mit einem bestimmten Prozentsatz, erzeugt werden. Bevorzugt wird die Kontrollgrenze OG unter Berücksichtigung der zu erreichenden Ausgleichgenauigkeit konfiguriert. Dadurch hat der Zielbereich C die Eigenschaft einer Toleranz der Ausgleichgenauigkeit von Regeldifferenzen. Befindet sich der momentane Wert der Regelgröße y(t) in diesem Ziellastbereich C ist die gewünschte Prozessbelastung erreicht. Dem Ziellastbereich C ist ein Regelfaktor K3 mit dem Wert null (0) zugeordnet, so dass keine Änderung der Stellgröße u(t) erfolgt, wodurch die Regelung faktisch unterbunden wird, solange sich der momentane Wert der Regelgröße y(t) innerhalb dieses Ziellastbereichs C befindet.

Jedes Belastungskennfeld A, B und C gibt für einen definierten Wert oder Wertebereich der Regelgröße y(t) einen vorbestimmten Regelfaktor K1, K2 und K3 vor. Die Einordnung bzw. Zuordnung erfolgt durch Vergleich in einer sogenannten Vorsteuerung 30, die den für die aktuelle Regelung gültigen Regelfaktor K1, K2 oder K3 ermittelt bzw. bestimmt und dem P-Regler 20 übergibt. Bei der Vorsteuerung 30 kann es sich um ein Hardware- und/oder Softwaremodul handeln, das insbesondere auch nachträglich in vorhandene Steuergeräte eingefügt werden kann. Die Belastungskennfelder A, B und C können bspw. prozessabhängig und/oder werkstückabhängig definiert bzw. programmiert, abgespeichert und bei Bedarf wieder aufgerufen und verwendet werden. Insbesondere ist auch das Anlegen eines (virtuellen) Katalogs möglich.

Der Vorteil der erfindungsgemäßen belastungskennfeldabhängigen Regelung besteht zum einen darin, dass die Konfiguration des P-Reglers ohne spezifisches Wissen über das verwendete bzw. eingesetzte spanende Fertigungsverfahren möglich ist. Zur Konfiguration muss lediglich der Regelfaktor K theoretisch oder durch Versuche ermittelt werden. Die Kontrollgrenze UG und der Sicherheitsfaktor SF können pauschal oder speziell nach den erforderlichen Regelungsaufgaben definiert werden. Somit wird der Aufwand für die Konfiguration des P-Reglers erheblich reduziert. Ferner werden typische Nachteile eines P-Reglers, insbesondere das ständige Regeln (Unvermögen der vollständigen Ausregelung) und die Unflexibilität bei der Regelung, vermieden.

### Bezugszeichen

- 10: Bearbeitungsprozess
- 20: P-Regler
- 30: Vorsteuerung
- A: Belastungskennfeld (Überlastbereich)
- B: Belastungskennfeld (Unterlastbereich)
- C: Belastungskennfeld (Ziellastbereich)
- K: Regelfaktor
- K1: Regelfaktor (Überlastbereich)
- K2: Regelfaktor (Unterlastbereich)
- K3: Regelfaktor (Ziellastbereich)
- OG: Prozessbelastungsgrenze
- UG: Kontrollgrenze
- SF: Sicherheitsfaktor
- d(t): Störgröße
- e(t): Regelabweichung
- u(t): Stellgröße
- y(t): Regelgröße
- w(t): Führungsgröße
- t: Bearbeitungszeit

## Patentansprüche

1. Verfahren zur Regelung eines spanenden Bearbeitungsprozesses (10) auf einer Werkzeugmaschine mittels P-Regler (20), der basierend auf einer Regelabweichung (e(t)) zwischen einer Regelgröße (y(t)) und einer Führungsgröße (w(t)) eine den spanenden Bearbeitungsprozess (10) beeinflussende Stellgröße (u(t)) verändert, **dadurch gekennzeichnet, dass** der Regelfaktor (K) des P-Reglers (20) veränderlich ist und in Abhängigkeit des momentanen Werts der Regelgröße (y(t)) über vorab definierte Belastungskennfelder (A, B, C) ermittelt wird, wobei jedes Belastungskennfeld (A, B, C) für einen definierten Wert oder Wertebereich der Regelgröße (y(t)) einen vorbestimmten Regelfaktor (K1, K2, K3) vorgibt.

2. Verfahren nach Anspruch 1, **dadurch gekennzeichnet, dass** als Regelgröße (y(t)) die an einer Maschinenachse der Werkzeugmaschine auftretende Kraft oder die Leistung eines Maschinenantriebs der Werkzeugmaschine verwendet wird.

3. Verfahren nach Anspruch 1 oder 2, **dadurch gekennzeichnet, dass** als Stellgröße (u(t)) die Vorschubgeschwindigkeit des Werkzeugs oder die Drehzahl des Werkzeugs verwendet wird.

4. Verfahren nach einem der vorausgehenden Ansprüche, **dadurch gekennzeichnet, dass** drei Belastungskennfelder (A, B, C) vorgesehen sind, die jeweils einen Regelfaktor (K1, K2, K3) für einen Überlastbereich, einen Unterlastbereich und einen Ziellastbereich vorgeben.

5. Verfahren nach Anspruch 4, **dadurch gekennzeichnet, dass** der Regelfaktor (K3) für den Ziellastbereich (C) den Wert null aufweist.

6. Verfahren nach Anspruch 4 oder 5, **dadurch gekennzeichnet, dass** der Regelfaktor (K2) für den Unterlastbereich (B) durch Multiplikation des Regelfaktors (K1) für den Überlastbereich (A) mit einem Sicherheitsfaktor (SF) bestimmt wird.

7. Steuergerät für eine spanende Werkzeugmaschine, das zur Regelung eines spanenden Bearbeitungsprozesses (10) auf der Werkzeugmaschine mit Hilfe eines P-Reglers (20) ausgebildet ist, derart, dass der P-Regler (20) basierend auf einer Regelabweichung (e(t)) zwischen einer Regelgröße (y(t)) und einer Führungsgröße (w(t)) eine den spanenden Bearbeitungsprozess (10) beeinflussende Stellgröße (u(t)) verändert, wobei der Regelfaktor (K) des P-Reglers (20) veränderlich ist und in Abhängigkeit des momentanen Werts der Regelgröße (y(t)) über vorab definierte Belastungskennfelder (A, B, C) ermittelt wird, wozu jedes Belastungskennfeld (A, B, C) für einen definierten Wert oder Wertebereich der Regelgröße (y(t)) einen vorbestimmten Regelfaktor (K1, K2, K3) vorgibt.

8. Werkzeugmaschine aufweisend ein Steuergerät gemäß Anspruch 7.

9. Werkzeugmaschine nach Anspruch 8, **dadurch gekennzeichnet, dass** die Werkzeugmaschine eine Fräs- und/oder Schleifmaschine ist.

10. Verfahren zur spanenden Bearbeitung eines Werkstücks unter Anwendung eines Verfahrens zur Regelung des spanenden Bearbeitungsprozesses (10) gemäß einem der vorausgehenden Ansprüche 1 bis 6 und/oder unter Verwendung einer Werkzeugmaschine gemäß Anspruch 8 oder 9.

## Claims

1. Method for controlling a metal-removing machining process (10) on a machine tool by means of a P-controller (20) which changes an actuating variable (u(t)) influencing the metal-removing machining process (10) on the basis of a control deviation (e(t)) between a controlled variable (y(t)) and a reference variable (w(t)), **characterized in that** the control factor (K) of the P-controller (20) is variable and is determined as a function of the instantaneous value of the controlled variable (y(t)) via previously defined load characteristic maps (A, B, C), wherein each load characteristic map (A, B, C) predefines a predetermined control factor (K1, K2, K3) for a defined value or value range of the controlled variable (y(t)).

2. Method according to Claim 1, **characterized in that** the controlled variable (y(t)) used is the force acting on a machine shaft of the machine tool for the output of a machine drive of the machine tool.

3. Method according to Claim 1 or 2, **characterized in that** the actuating variable (u(t)) that is used is the feed rate of the tool for the rotational speed of the tool.

4. Method according to one of the preceding claims, **characterized in that** three load characteristic maps (A, B, C) are provided, which each predefine a control factor (K1, K2, K3) for an overload range, an underload range and a target load range.

5. Method according to Claim 4, **characterized in that** the control factor (K3) for the target load range (C) has the value zero.

6. Method according to Claim 4 or 5, **characterized in that** the control factor (K2) for the underload range (B) is determined by multiplying the control factor (K1) for the overload range (A) by a safety factor (SF).

7. Control device for a metal-removing machine tool, which is designed to control a metal-removing machining process (10) on the machine tool with the aid of a P-controller (20), in such a way that the P-controller (20) changes an actuating variable (u(t)) influencing the metal-removing machining process (10) on the basis of a control deviation (e(t)) between a controlled variable (y(t)) and a reference variable (w(t)), wherein the control factor (K) of the P controller (20) is variable and is determined as a function of the instantaneous value of the controlled variable (y(t)) via previously defined load characteristic maps (A, B, C), for which purpose each load characteristic map (A, B, C) predefines a predetermined control factor (K1, K2, K3) for a defined value or value range of the controlled variable (y(t)).

8. Machine tool having a control device according to Claim 7.

9. Machine tool according to Claim 8, **characterized in that** the machine tool is a milling and/or grinding machine.

10. Method for the metal-removing machining of a workpiece by using a method for controlling the metal-removing machining process (10) according to one of the preceding Claims 1 to 6 and/or while using a machine tool according to Claim 8 or 9.

## Revendications

1. Procédé de régulation d'un processus d'usinage (10) par enlèvement de copeaux sur une machine-outil au moyen d'un régulateur P (20), lequel modifie une grandeur de commande (u(t)) qui influence le processus d'usinage (10) par enlèvement de copeaux en se basant sur un écart de régulation (e(t)) entre une grandeur de régulation (y(t)) et une grandeur de référence (w(t)), **caractérisé en ce que** le facteur de régulation (K) du régulateur P (20) est variable et il est déterminé en fonction de la valeur momentanée de la grandeur de régulation (y(t)) sur des diagrammes caractéristiques de charge (A, B, C) préalablement définis, chaque diagramme caractéristique de charge (A, B, C) prédéfinissant un facteur de régulation prédéterminé (K1, K2, K3) pour une valeur ou une plage de valeurs définie de la grandeur de régulation (y(t)).

2. Procédé selon la revendication 1, **caractérisé en ce que** la grandeur de régulation (y(t)) est utilisée est la force produite au niveau d'un axe de machine de la machine-outil ou la puissance d'un mécanisme d'entraînement de machine de la machine-outil.

3. Procédé selon la revendication 1 ou 2, **caractérisé en ce que** la grandeur de commande (u(t)) utilisée est la vitesse d'avance de l'outil ou la vitesse de rotation de l'outil.

4. Procédé selon l'une des revendications précédentes, **caractérisé par** la présence de trois diagrammes caractéristiques de charge (A, B, C) qui prédéfinissent respectivement un facteur de régulation (K1, K2, K3) prédéterminé pour une plage de surcharge, une plage de charge insuffisante et une plage de charge cible.

5. Procédé selon la revendication 4, **caractérisé en ce que** le facteur de régulation (K3) pour la plage de charge cible (C) présente la valeur zéro.

6. Procédé selon la revendication 4 ou 5, **caractérisé en ce que** le facteur de régulation (K2) pour la plage de charge insuffisante (B) est déterminé en multipliant le facteur de régulation (K1) pour la plage de surcharge (A) par un coefficient de sécurité (SF) .

7. Contrôleur pour une machine-outil à enlèvement de copeaux, lequel est configuré pour la régulation d'un processus d'usinage (10) par enlèvement de copeaux sur la machine-outil à l'aide d'un régulateur P (20), de telle sorte que le régulateur P (20) modifie une grandeur de commande (u(t)) qui influence le processus d'usinage (10) par enlèvement de copeaux en se basant sur un écart de régulation (e(t)) entre une grandeur de régulation (y(t)) et une grandeur de référence (w(t)), le facteur de régulation (K) du régulateur P (20) étant variable et étant déterminé en fonction de la valeur momentanée de la grandeur de régulation (y(t)) sur des diagrammes caractéristiques de charge (A, B, C) préalablement définis, chaque diagramme caractéristique de charge (A, B, C) prédéfinissant à cet effet un facteur de régulation (K1, K2, K3) prédéterminé pour une valeur ou une plage de valeurs définie de la grandeur de régulation (y(t)).

8. Machine-outil comprenant un contrôleur selon la revendication 7.

9. Machine-outil selon la revendication 8, **caractérisée en ce que** la machine-outil est une fraiseuse et/ou une rectifieuse.

10. Procédé d'usinage par enlèvement de copeaux d'une pièce en utilisant le procédé de régulation du processus d'usinage (10) par enlèvement de copeaux selon l'une des revendications 1 à 6 précédentes et/ou en utilisant une machine-outil selon la revendication 8 ou 9.
